# EUROPÄISCHE PATENTSCHRIFT

(11) **EP 0 781 640 B1**
(45) Veröffentlichungstag und Bekanntmachung des Hinweises auf die Patenterteilung: **19.02.2003**
(21) Anmeldenummer: 96119518.7
(22) Anmeldetag: 05.12.1996
(51) Int. Cl.: B29C 45/28, B29C 45/27

(54) **Beheizte Nadelverschlussdüse**
Heated needle valve nozzle
Buse obturatrice à aiguille chauffée

(30) Priorität: 23.12.1995 DE 19548687
(43) Veröffentlichungstag der Anmeldung: 02.07.1997
(73) Patentinhaber: EWIKON Heisskanalsysteme GmbH & CO. Kommanditgesellschaft, D-32278 Kirchlengern (DE)
(72) Erfinder: Braun, Peter, Dr., 35410 Hungen (DE)
(74) Vertreter: Stracke, Alexander, Dipl.-Ing.

(56) Entgegenhaltungen:
- EP-A- 0 369 509
- EP-A- 0 443 203
- EP-A- 0 578 213
- DE-A- 2 539 785
- DE-C- 4 404 894
- US-A- 4 333 608
- US-A- 4 517 453

## Beschreibung

Die Erfindung bezieht sich auf eine beheizte Nadelverschlußdüse für Kunststoffspritzgießmaschinen, für Spritzgießwerkzeuge und für Heißkanaleinrichtungen nach dem Oberbegriff des Anspruches 1.

Eine gattungsgemäße beheizte Nadelverschlußdüse ist aus der EP-A-0 369 509 bekannt. Problematisch ist, daß die Nadelverschlußdüsen nur mit großem vorrichtungsmäßigen Aufwand herstellbar und mit höherem Energieverbrauch gleichmäßig beheizbar sind. Ebenfalls nachteilig ist der relativ hohe Druckverlust der bekannten Düsen und die große räumliche Bauform, welche das Anwendungsgebiet einschränkt.

Bei bekannten Nadelverschlußdüsen sind ferner zur Verschiebung der Verschlußnadel in axialer Öffnungs- bzw. Schließrichtung mechanische, pneumatische oder hydraulische Antriebsmittel vorgesehen.

Bei derartigen Düsen, die eine mit der Spritzgießmaschine verbundene Schmelzeeintrittsseite und eine mit dem Formnest verbundene Schmelzeaustrittsseite aufweisen, besteht die Schwierigkeit, der Verschlußnadel die zur axialen Verschließ- und Öffnungsbewegung notwendige Kraft zuzuführen. Sowohl auf der Schmelzeeintrittsseite als auch auf der Schmelzeaustrittsseite besteht keine Möglichkeit, die Nadel mit entsprechenden Antrieben zu verbinden. Aus diesem Grunde werden bei Nadelverschlußdüsen nach dem Stand der Technik die Kräfte im mittleren Bereich zugeführt. Dies erfordert jedoch eine entsprechende Umleitung des Strömungskanals um den mittleren Bereich herum, wie es in der US-A-5 387 099 und in der EP-A-0 373 293 dargestellt ist und beschrieben wird.

Derartige Umleitungen sind nachteilig, weil die hohen Spritzdrücke innerhalb des Strömungskanals oft zu Dichtigkeitsproblemen und zu unkontrollierten, von der strömenden Schmelze verursachten, seitlich auf die Verschlußnadel einwirkenden Kräften führen, die die Nadeln einseitig belasten. Dieses führt sowohl im Bereich der Nadelführungen im Düsenkörper als auch im Bereich des Verschlußsitzes, der aus dem vorderen Nadelende und aus dem korrespondierenden Düsenmund besteht, zu erheblichem Verschleiß.

Außerdem sind derartige Nadelverschlußdüsen nur mit größerem vorrichtungsmäßigem Aufwand herstellbar und mit höherem Energieverbrauch gleichmäßig beheizbar.

Weiterhin weisen die bekannten Düsen mit der im vorausgehenden genannten Umleitung oft einen höheren Druckverlust auf.

Vorgenannte Gründe haben ungünstige Auswirkungen auf die Qualität des Spritzlings. Ein weiterer Nachteil der bekannten Düsen ist die erforderliche räumlich große Bauform, die das Anwendungsgebiet erheblich einschränkt.

Der Erfindung liegt die Aufgabe zugrunde, eine beheizte Nadelverschlußdüse der eingangs genannten Art so zu gestalten, daß eine einseitige Belastung der Nadel durch die strömende Schmelze unterbunden wird und die Abmessungen der Nadelverschlußdüse kleingehalten werden.

Diese Aufgabe wird durch die im kennzeichnenden Teil des Patentanspruches 1 genannten Merkmale gelöst.

Weitere Ausgestaltungen der Erfindung ergeben sich aus den Unteransprüchen.

Ausführungsbeispiele der erfindungsgemäßen, beheizten Nadelverschlußdüse sind in den Zeichnungen dargestellt und werden im folgenden beschrieben.

Es zeigen:
- Figur 1a, 1b und 2: die wesentlichen Funktionsteile der beheizbaren Nadelverschlußdüse und zwar teilweise geschnitten,
- Figur 3: eine gegenüber der Fig. 2 abgewandelte Ausführungsform, teilweise im Vertikalschnitt,
- Figuren 4 und 5: eine weitere Ausführungsform der Nadelverschlußdüse,
- Figur 6: eine Vergrößerung des Ausschnitts A aus der Fig. 4 und
- Figur 7: ein weiteres Ausführungsbeispiel mit den wesentlichen Funktionsteilen im Vertikalschnitt.

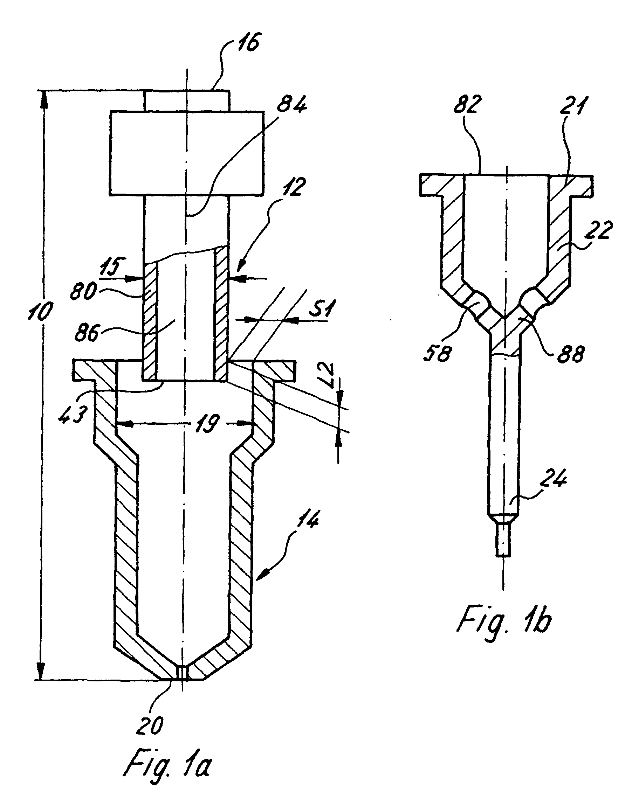

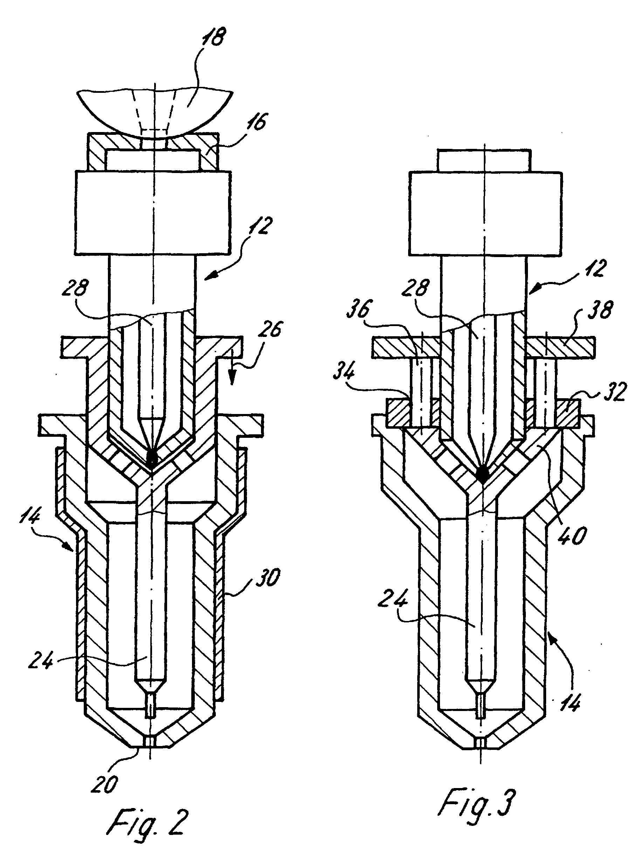

In den Figuren 1a, 1b und in der Fig. 2 ist ein wesentlicher Grundgedanke stark vereinfacht dargestellt.

Es ist ein Heißkanalabschnitt 10 aufgezeigt, der aus den Teilabschnitten 12 und 14 gebildet wird, dessen eines Ende 16 mit einer Maschinendüse 18 oder einem nicht dargestellten Heißkanalverteiler verbunden sein kann und dessen anderes Ende 20 die eigentliche Düse darstellt, an die sich das Formnest bzw. der Formhohlraum des Spritzgießwerkzeuges anschließt.

Die beiden schematisch in Fig. 1a dargestellten Teilabschnitte 12,14 sind zum besseren Verständnis und zur besseren Übersicht ohne Heizungselemente und integrierter Düsennadel dargestellt. Es wird jedoch deutlich, daß zwischen dem Außendurchmesser 15 des Teilabschnittes 12 und dem Innendurchmesser 19 des Teilabschnittes 14 ein Spalt S1 gebildet wird. Wie die Fig. 2 verdeutlicht, wird in diesem Spalt S1 die mit entsprechender Wandstärke gestaltete Hülse 22 angeordnet, die somit axial verschieblich zwischen den Teilabschnitten 12,14 gelagert ist. Die Hülse 22 ist an einem Ende mit einer Vorrichtung 21 versehen, die geeignet ist, mit einem nicht dargestellten Kraftantrieb zusammenzuwirken, der die Hülse axial verschieben kann und auf den noch eingegangen wird. Am gegenüberliegenden Ende ist die Hülse 22 mit einer Verschlußnadel 24 verbunden.

Die Fig. 2 zeigt die Hülse 22 und die Verschlußnadel 24 in geöffneter Stellung. Eine Bewegung der Hülse in Richtung des Pfeiles 26 bringt die Verschlußnadel 24 in die Verschlußstellung.

In der Fig. 1a ragt der Teilabschnitt 12 um das Maß L2 in den Teilabschnitt 14.

Der Teilabschnitt 12 besteht aus einem im wesentlichen zylindrisch ausgebildeten Rohrkörper 80, in dem ein Strömungskanal 86 für die Materialschmelze ausgebildet ist. Auf dem Außendurchmesser 15 des Rohrkörpers 80 wird die Hülse 22, wie dies in der Fig. 2 aufgezeigt ist, dichtend beweglich geführt. Die Hülse 22 ist ferner mit ihrem Außendurchmesser in dem zweiten Teilabschnitt 14 dichtend beweglich geführt. An ihrem freien nach außen weisenden Ende 82 ist die Hülse mit einem Kraftantrieb und mit ihrem in den Strömungskanal weisenden Ende 88 mit der Verschlußnadel 24 verbunden.

Der Strömungskanal 86 des Heißkanalabschnittes 10 verläuft im wesentlichen auf seiner gesamten Länge symmetrisch zur gemeinsamen Achse 84 der Teilabschnitte 12,14, der Verschlußnadel 24 und der Hülse 22.

Die Fig. 2 zeigt weiterhin ein im Teilabschnitt 12 mittig angeordnetes elektrisches Heizelement 28 und ein den Teilabschnitt 14 umgebendes Heizelement 30. Hierdurch wird ein Kerngedanke der Erfindung deutlich, der darin besteht, in einem der Teilabschnitte ein mittiges Heizelement anzuordnen, um einen von Heizelementen freien Außendurchmesser (z.B. 15) und am anderen Teilabschnitt einen von Heizelementen freien Innendurchmesser (z.B. 19) zu erhalten. Auf diese Weise ergeben sich geeignete Zylinderflächen, an denen die Hülse 22 gleitbar und dichtend geführt werden kann.

Gerade diese Maßnahmen, einen Innenheizer im Bereich des von einer Verschlußnadel freien Teilabschnittes 12 vorzusehen und einen Außenheizer im Bereich des Teilabschnittes 14 anzuordnen, dessen Innenraum von der Verschlußnadel 24 beansprucht wird, wobei gleichzeitig die unverzichtbaren zylindrischen Außenflächen gebildet werden und zur Verfügung stehen, macht die Besonderheit dieser Anordnung deutlich. Auf die speziellen Gestaltungen der verschiedenen Heizelemente wird im Rahmen dieser Beschreibung nicht eingegangen, weil sie nicht Gegenstand der Erfindung sind. Hier kann auf den bekannten Stand der Technik zurückgegriffen werden. Innenliegende Heizelemente sind z.B. aus DE-A-33 35 280 und DE-A-28 24 971 bekannt. Ferner werden außenliegende Heizelemente in der DE-A-36 40 620 beschrieben.

Die Hülse 22 kann an dem der Verschlußnadel 24 abgewandten Ende mit einem hydraulischen, pneumatischen oder mechanischen Antrieb verbunden sein, durch den die Hülse 22 axial bewegt werden kann, um die Verschließ- und Öffnungsbewegung der mit der Hülse verbundenen Verschlußnadel 24 herbeizuführen.

Die Fig. 3 zeigt eine Abwandlungsform zu der Konstruktion nach der Fig. 2, die ebenfalls den sich zwischen den Teilabschnitt 12,14 ergebenden Spalt S1 nutzt. Bei dieser Ausführung wird der Spalt von einer Führungsbuchse 32 ausgefüllt, die mindestens eine Bohrung 34 aufweist, durch die ein Bolzen 36 hindurchgeführt ist, der die Vorrichtung 38 mit der Hülse 40 getriebemäßig verbindet.

Die HÜlse 40 ist an ihrer der Verschlußnadel 24 abgewandten Stirnfläche mit einer Kontur versehen, die dem vorderen Ende des Teilabschnittes 12 und/oder des Heizelementes 28 entspricht.

Das Heizelement 28 erstreckt sich bei den Ausführungsformen nach den Fig. 2 und 3 bis in den Einflußbereich des Heizelementes 30.

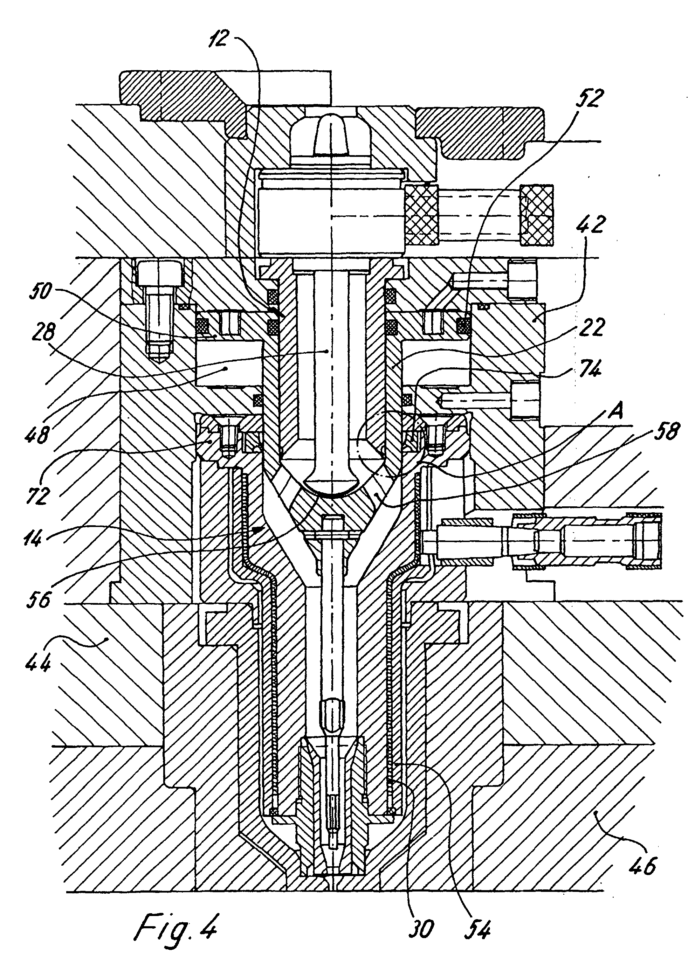

Die Fig. 4 zeigt den Heißkanalabschnitt 10 in detaillierter Form. Ein derartiger Heißkanalabschnitt muß hinsichtlich seiner Wärmeführung möglichst im vorbestimmten Maße Wärme erzeugen und an die Schmelze abführen. Es darf weder zu örtlichen Überhitzungen kommen noch dürfen Wärmeverluste oder gar Erstarrungen der Schmelze auftreten.

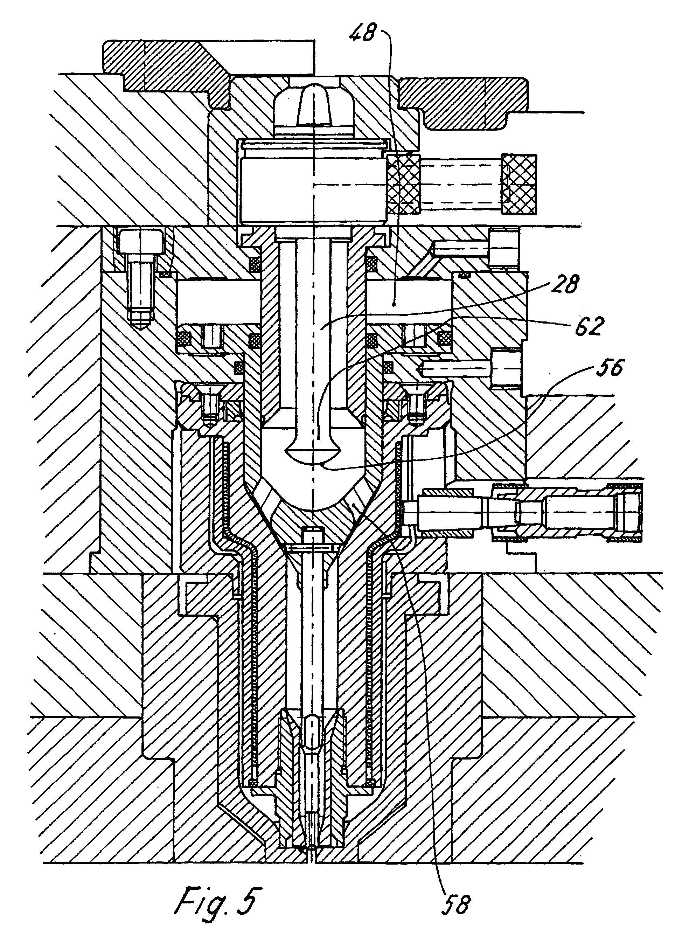

Bei der erfindungsgemäßen Nadelverschlußdüse kommt es insbesondere auch darauf an, daß im Bereich des Zusammenwirkens von Teilabschnitten 12,14 und der Hülse 22 bzw. 40 die Wärmeausdehnungen ein vorberechnetes Maß nicht überschreiten, um Dichtigkeitsprobleme zu vermeiden. Weiterhin darf es nicht zu Überhitzungen im Bereich der Vorrichtung 21 kommen, insbesondere nicht, wenn diese, wie im Ausführungsbeispiel nach den Fig. 4 und 5 als hydraulisch/pneumatischer Kolben mit Dichtelementen ausgeführt ist.

Die Teilabschnitte 12,14 des Heißkanalabschnittes 10 sind in einem Gehäuse 42 und in Werkzeugplatten 44,46 festgelegt. Dabei ist in dem Gehäuse 42 ein Zylinder 48 ausgebildet, der mit der zu einem Kolben 50 ausgebildeten Vorrichtung 21 sowie der Hülse 22 zusammenwirkt. Der Kolben 50 ist mit Dichtungen 52 ausgerüstet. Der Kolben 50 kann mittels Druckmedien in die Schließ- bzw. Offenstellung der Verschlußnadel bewegt werden. Durch das innenliegende Heizelement 28 im Bereich des Teilabschnittes 12 gelangt wenig Wärme nach außen. Dadurch bleiben die umgehenden bzw. angrenzenden Bauteile, wie z.B. der Kolben und der Zylinder, insbesondere deren Dichtungen relativ kühl. Dieses wirkt sich besonders günstig auf deren Lebensdauer aus. Der Teilabschnitt 14 ist von einer Hülse 54 umgeben, wobei zwischen dem Teilabschnitt und der Hülse 54 ein Heizelement 30 gelagert ist. Dieses Heizelement könnte z.B. aus einer Heizwendel o.dgl. bestehen.

Bei dem Ausführungsbeispiel gemäß den Fig. 4 und 5 ist das Heizelement 28 nach dem bekannten Stand der Technik, z.B. nach der DE-A- 33 35 280 ausgebildet. Hier ist ein mittig angeordneter, elektrisch leitender Heizstab elektrisch isoliert von einem Rohrkörper umgeben, wobei Heizstab und Rohrkörper an ihrem freien Ende elektrisch verbunden sind und einen Stromkreis bilden. Diese Anordnung aus Heizstab und Rohr wird allgemein Heizleiter genannt. Im Bereich seines vorderen freien Endes ist der Heizleiter in seinem Durchmesser vergrößert ausgebildet. Bei zurückgezogener Verschlußnadel, d.h. in der Stellung, in der die Düse geöffnet ist und Schmelze in das Formnest fließen kann, bildet die in den Fig. 4 und 5 gezeigte Formgebung des freien Endes des Heizelementes 28 zwei wichtige Vorteile. Die vordere als Teilkalotte ausgebildete Stirnfläche 56 des Heizleiters ermöglicht beim Zurückziehen (Öffnen) der Verschlußnadel, daß einerseits die Schmelze strömungsgünstig durch Öffnungen 58 ausweichen kann und andererseits schafft sich gleichzeitig eine Vergrößerung der Oberfläche, um genügend Wärme in die benachbarte Stirnfläche 56 zu übertragen. Die konusartige Vergrößerung 62 zwischen der Teilkalotte und dem zylindrischen Teil des Heizleiters 28 leitet die Schmelze strömungsgünstig durch die öffnungen 58 in den zweiten Teilabschnitt 14.

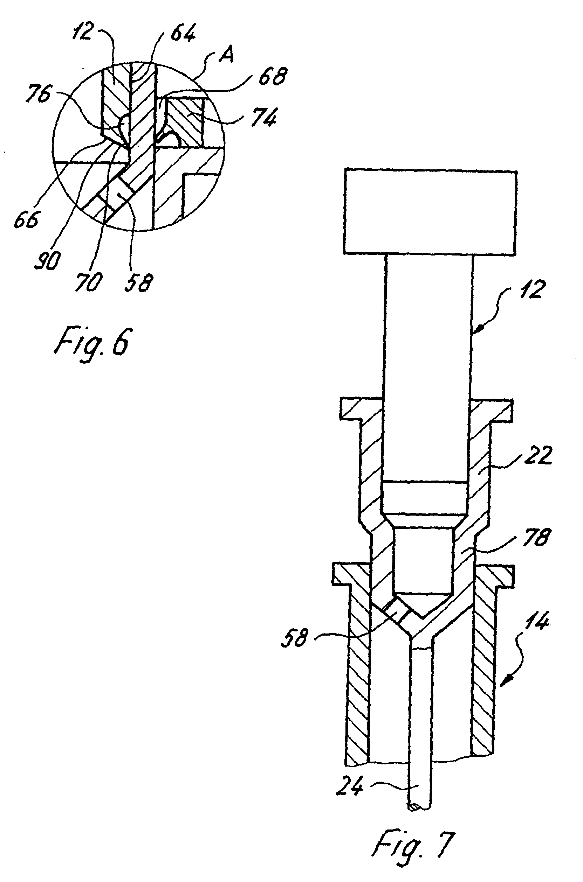

In der Fig. 6 ist in vergrößerter Darstellung die Einzelheit A in Fig. 4 aufgezeigt.

Es liegt im Rahmen der Erfindung, den hier dargestellten Außenmantel 64 des Teilabschnittets 12 auf seiner Außenfläche, insbesondere benachbart dem Ende 43,66 des Teilabschnittes 12 mit einer umlaufenden Nut 76 auszustatten, die mit einer relativ elastischen Dichtlippe 70 ausgebildet ist. Des weiteren kann im Bereich des oberen Endes 72 des Teilabschnittes 14 eine Dichtung 74 in einer entsprechenden Ausnehmung 68 angeordnet sein. Derartige Dichtungen gehören jedoch zum bekannten Stand der Technik, so daß hierauf nicht weiter eingegangen wird.

Bei einer anderen bevorzugten Ausführungsform der Erfindung sind zwischen der beweglichen Hülse 22 und den feststehenden Teilabschnitten 12,14 keine besonderen Dichtungen vorgesehen. Hierbei nutzt man den Umstand, daß die Schmelze jeweils benachbart der den Strömungskanal zwar begrenzenden jedoch kühleren Wandungen in mehr oder weniger dicken Schichten erstarrt. Diese erstarrten Schichten im Bereich der relativ zueinander beweglichen Bauteile bilden eine natürliche Abdichtung, die separate Dichtungen erübrigen kann. Dabei hat es sich als besonders vorteilhaft herausgestellt, daß die vordere ringförmige Stirnfläche des ersten Teilabschnittes 12 im Bereich des äußeren Durchmessers einen schneidenartigen Rand 90 aufweist. Dieser schält die zwar noch heißen aber bereits erstarrten Bereiche des Kunststoffmaterials von der Wandung der Hülse 22 ab und führt das Material in den Kernbereich der Schmelze zurück. So baut sich mit jedem Zyklus ein neuer erstarrter und dichtender Bereich auf, der jedoch auch immer wieder zurückgeführt wird.

Im Bereich des zwischen dem Teilabschnitt 14 und der Hülse 22 gebildeten Spaltes ist die Situation ähnlich. Es wird das gleiche Wirkprinzip benutzt. In diesen Spalt wird ebenfalls Schmelze eindringen und erstarren. Bei in Verschlußstellung drängender Verschlußnadel wird die Schmelze durch die Öffnungen 58 zurückgedrängt. Die erstarrte Schicht, die zur Abdichtung herangezogen wird, verbleibt im Bereich der kühleren Bereiche des Teilabschnittes 14.

Figur 7 zeigt ein Ausführungsbeispiel, bei dem kein Spalt zwischen den Teilabschnitten 12,14 ausgebildet ist. Hier ist die Hülse 22 an ihrem der Verschlußnadel 24 zugewandten Ende 78 im Durchmesser reduziert. Hierdurch ist es möglich, den Durchmesser des zweiten Teilabschnittes 14 zu verringern, wodurch bei Mehrfachformen, d.h. wenn mehrere Heißkanalabschnitte 10 aus einem Verteiler gespeist werden, die Nestabstände kleingehalten werden können. Bei diesem Ausführungsbeispiel ist kein Spalt S1 ausgebildet, sondern die den Teilabschnitten 12,14 angepaßten Durchmesser der Hülse 22 ermöglichen die Abdichtung zu den Teilabschnitten 12,14. Abgesehen von diesem abweichenden Merkmal ist die Konstruktion nach der Fig. 7 in ihren Funktionsteilen so gestaltet wie die im vorhergehenden beschriebenen Ausführungsformen.

## Patentansprüche

1. Beheizte Nadelverschlußdüse für Kunststoffspritzgießmaschinen, für Spritzgießwerkzeuge oder für Heißkanaleinrichtungen, wobei
a) der einen Verteiler oder eine Maschinendüse (18) mit einem Formnest verbindende Heißkanalabschnitt (10) aus zwei Teilabschnitten (12, 14) besteht und
b) der einem Heißkanalverteiler oder der Maschinendüse (18) zugewandte Teilabschnitt (12) an einem dem Teilabschnitt (14) zugewandten Ende (43) aus einem im wesentlichen zylindrisch ausgebildeten Rohrkörper (80) besteht,
c) der Teilabschnitt (14) von einem ihn außen umschließenden Heizelement (30) umgeben ist, wobei
d) an der Außenseite des Rohrkörpers (80) Führungs- und Betätigungsmittel für eine sich in den Innenraum des Teilabschnitts (14) erstreckende Verschlußnadel (24) angeordnet sind,
**dadurch gekennzeichnet, daß**
e) der erste Teilabschnitt (12) ein mittig angeordnetes Heizelement (28) aufweist, so daß ein kreisringförmiger Strömungskanal (86) gebildet wird,
f) wobei das Heizelement (28) bis in den Einflußbereich des Heizelementes (30) reicht.

2. Beheizte Nadelverschlußdüse nach Anspruch 1, **dadurch gekennzeichnet, daß** die aufeinander zu gerichteten Enden des ersten und zweiten Teilabschnittes (12,14) solche Durchmesser aufweisen, daß sich ein Ringspalt (S1) ergibt, in dem eine Hülse (22) dichtend und axial verschiebbar angeordnet ist.

3. Beheizte Nadelverschlußdüse nach Anspruch 1 oder 2, **dadurch gekennzeichnet, daß** der Außendurchmesser des Teilabschnittes (12) gleich oder größer ist als der Innendurchmesser des Teilabschnittes (14), und daß die die beiden Teilabschnitte (12,14) verbindende Hülse (22) zwischen der Anschlußstelle der Verschlußnadel und dem freien Ende der Hülse einen Längenabschnitt (78) aufweist, der im Durchmesser in der Weise reduziert ist, daß die Hülse (22) mit dem Außendurchmesser des Längenabschnittes (78) im Teilabschnitt (14) axial verschiebbar gelagert ist und der Hülsenabschnitt größeren Durchmessers den Teilabschnitt (12) axial gleitbar umgreift.

4. Beheizte Nadelverschlußdüse nach einem der Ansprüche 1 bis 3, **dadurch gekennzeichnet, daß** der Strömungskanal des Heißkanalabschnittes (10) im wesentlichen auf seiner gesamten Länge symmetrisch zur gemeinsamen Achse (84) der Teilabschnitte (12,14) und der Verschlußnadel (24) und der Hülse (22) verläuft.

5. Beheizte Nadelverschlußdüse nach einem der Ansprüche 1 bis 4, **dadurch gekennzeichnet, daß** die Hülse (22) benachbart ihrem der Verschlußnadel 824) abgewandten Ende mit einem hydraulischen, pneumatischen oder mechanischen Antrieb verbunden ist, der an der Hülse (22) angreift, die Hülse axial bewegt und so die Verschließ- und öffnungsbewegung der mit der Hülse verbundenen Verschlußnadel (24) herbeiführt.

6. Beheizte Nadelverschlußdüse nach einem der Ansprüche 1 bis 5, **dadurch gekennzeichnet, daß** die Teilabschnitte (12,14) sich um ein Maß L2 überlappen.

7. Beheizte Nadelverschlußdüse nach Anspruch 1, **dadurch gekennzeichnet, daß** die Hülse (40) an ihrer der Verschlußnadel (24) abgewandten Stirnfläche eine Kontur aufweist, die dem vorderen Ende des Teilabschnittes (12) und/oder des Heizelementes (28) entspricht.

8. Beheizte Nadelverschlußdüse nach Anspruch 2, **dadurch gekennzeichnet, daß** die Hülse (22) einstückig mit einer als Kolben wirkenden Vorrichtung (21) und der Kolben in einem Zylinder (48) beweglich gelagert ist.

9. Beheizte Nadelverschlußdüse nach Anspruch 1, **dadurch gekennzeichnet, daß** das vordere freie Ende des Heizelementes (28) eine konusartige Vergrößerung (62) aufweist.

10. Beheizte Nadelverschlußdüse nach Anspruch 9, **dadurch gekennzeichnet, daß** das Stirnende des Heizelementes (28) eine größere Oberfläche aufweist als die Querschnittsfläche in seinem schaftförmigen Bereich und insbesondere die Form einer Teilkalotte hat.

11. Beheizte Nadelverschlußdüse nach einem der vorhergehenden Ansprüche, **dadurch gekennzeichnet, daß** der Teilabschnitt (12) im Bereich der Stirnfläche seines äußeren Mantels einen schneidenartigen Rand (90) aufweist.

12. Beheizte Nadelverschlußdüse nach einem der Ansprüche 1 bis 11, **dadurch gekennzeichnet, daß** in den Außenmantel des Teilabschnittes (12) im Bereich seines Endes (66) eine umlaufende Nut eingeformt ist, die relativ elastische Dichtlippen ausbildet.

13. Beheizte Nadelverschlußdüse nach Anspruch 12, **dadurch gekennzeichnet, daß** im Bereich des dem Teilabschnitt (12) zugewandten Endes des Teilabschnittes (14) eine nach Anspruch 12, ausgebildete, jedoch mit dem Außendurchmesser der Hülse (22) zusammenwirkende Dichtung (74) angeordnet ist.

14. Beheizte Nadelverschlußdüse nach Anspruch 1, **dadurch gekennzeichnet, daß** der Ringspalt (S1) durch eine Führungsbuchse (32) ausgefüllt ist, die mindestens eine Bohrung aufweist, durch die ein Bolzen (36) hindurchführt, der die Vorrichtung (38) mit der Hülse (40) getriebemäßig verbindet.

## Claims

1. Heated needle closure nozzle for plastics material injection moulding machines, for injection moulding tools or for hot runner devices, wherein
a) the hot channel section (10) connecting a distributor or a machine nozzle (18) with a mould nest consists of two part sections (12, 14), and
b) the part section (12) facing a hot channel distributor or the machine nozzle (18) consists, at an end (43) facing the part section (14), of a substantially cylindrically constructed tubular body (80),
c) the part section (14) is surrounded by a heating element (30) which encloses it at the outside, wherein
d) guide and actuating means for a closure needle (24) extending in the interior space of the part section (14) are arranged at the outer side of the tubular body (80),
**characterised in that**
e) the first part section (12) has a centrally arranged heating element (28), so that a circularly annular flow channel (86) is formed,
f) wherein the hearing element (28) extends into the region of influence of the heating element (30).

2. Heated needle closure nozzle according to claim 1, **characterised in that** the ends of the first and second part sections (12, 14) directed towards one another have such a diameter that an annular gap (S1) results, in which a sleeve (22) is sealingly arranged to be axially displaceable.

3. Heated needle closure nozzle according to claim 1 or 2, **characterised in that** the outer diameter of the part section (12) is the same as or larger than the inner diameter of the part section (14), and that the sleeve (22) connecting the two part sections (12, 14) has between the connecting point of the closure needle and the free end of the sleeve a length section (78) which is reduced in diameter in such a manner that the sleeve (22) is mounted by the outer diameter of the length section (78) in the part section (14) to be axially displaceable and the sleeve section of greater diameter engages around the part section (12) in axially slidable manner.

4. Heated needle closure nozzle according to one of claims 1 to 3, **characterised in that** the flow channel of the hot channel section (10) extends substantially over its entire length symmetrically with respect to the common axis (84) of the part sections (12, 14) and the closure needle (24) and the sleeve (22).

5. Heated needle closure nozzle according to one of claims 1 to 4, **characterised in that** the sleeve (22) is connected adjacent to its end remote from the closure needle (24) with a hydraulic, pneumatic or mechanical drive which engages at the sleeve (22), axially moves the sleeve and thus brings about the closing movement and opening movement of the closure needle (24) connected with the sleeve.

6. Heated needle closure nozzle according to one of claims 1 to 5, **characterised in that** the part sections (12, 14) overlap by a dimension L2.

7. Heated needle closure nozzle according to claim 1, **characterised in that** the sleeve (40) has at its end face remote from the closure needle (24) a profile which corresponds with the front end of the part section (12) and/or of the heating element (28).

8. Heated needle closure nozzle according to claim 2, **characterised in that** the sleeve (22) is mounted in a cylinder (48) to be movable as one part with a device (21), which acts as a piston, and the piston.

9. Heated needle closure nozzle according to claim 1, **characterised in that** the forward free end of the heating element (28) has a cone-like enlargement (62).

10. Heated needle closure nozzle according to claim 9, **characterised in that** the front end of the heating element (28) has a larger surface than the cross-sectional area in its shank-shaped region and, in particular, has the shape of a part dome.

11. Heated needle closure nozzle according to one of the preceding claims, **characterised in that** the part section (12) has in the region of the end face of its outer circumferential surface a blade-like edge (90).

12. Heated needle closure nozzle according to one of claims 1 to 11, **characterised in that** an encircling groove, which forms relatively resilient sealing lips, is formed in the outer circumferential surface of the part section (12) in the region of its end (66).

13. Heated needle closure nozzle according to claim 12, **characterised in that** a seal (74) which is formed in accordance with claim 12, but co-operates with the outer diameter of the sleeve (22), is arranged in the region of the end of the part section (14) facing the part section (12).

14. Heated needle closure nozzle according to claim 1, **characterised in that** the annular gap (S1) is filled by a guide bush (32) which has at least one bore through which a bolt (36) is guided, which connects the device (38) with the sleeve (40) in terms of transmission.

## Revendications

1. Buse chauffée à fermeture à aiguille pour machines de moulage par injection de matière plastique, pour outillages de moulage par injection ou pour dispositifs à canal chauffant, dans laquelle
a) le tronçon de canal chauffant (10), reliant un distributeur ou une buse de machine (18) à une cavité de moule, est constitué de deux tronçons partiels (12, 14), et
b) le tronçon partiel (12), tourné vers un distributeur à canal chauffant ou la buse de machine (18), est constitué, à une extrémité (43) tournée vers le tronçon partiel (14), d'un corps tubulaire (80) sensiblement cylindrique,
c) le tronçon partiel (14) est entouré par un élément chauffant (30) l'entourant à l'extérieur,
d) des moyens de guidage et d'actionnement d'une aiguille de fermeture (24) s'étendant dans le volume intérieur du tronçon partiel (14) sont disposés sur le côté extérieur du corps tubulaire (80),
**caractérisée en ce que**
e) le premier tronçon partiel (12) comporte un élément chauffant (28) disposé au milieu, de sorte qu'il est formé un canal d'écoulement (86) en forme d'anneau circulaire,
f) l'élément chauffant (28) s'étendant jusque dans la zone d'action de l'élément chauffant (30).

2. Buse chauffée à fermeture à aiguille selon la revendication 1, **caractérisée en ce que** les extrémités dirigées l'une vers l'autre du premier et du deuxième tronçon partiel (12, 14) présentent des diamètres tels qu'il est formé une fente annulaire (S1) dans laquelle une douille (22) est disposée de manière étanche et coulissante axialement.

3. Buse chauffée à fermeture à aiguille selon la revendication 1 ou 2, **caractérisée en ce que** le diamètre extérieur du tronçon partiel (12) est égal ou supérieur au diamètre intérieur du tronçon partiel (14), et **en ce que** la douille (22), qui relie les deux tronçons partiels (12, 14), présente, entre l'emplacement de raccordement de l'aiguille de fermeture et l'extrémité libre de la douille, un tronçon de longueur (78) dont le diamètre est réduit de manière que la douille (22) avec le diamètre extérieur du tronçon de longueur (78) soit montée coulissante axialement dans le tronçon partiel (14) et que le tronçon de douille de plus grand diamètre entoure le tronçon partiel (12) de manière à pouvoir glisser axialement.

4. Buse chauffée à fermeture à aiguille selon l'une des revendications 1 à 3, **caractérisée en ce que** le canal d'écoulement du tronçon de canal chauffant (10) s'étend sensiblement sur toute sa longueur symétriquement par rapport à l'axe commun (84) des tronçons partiels (12, 14) et de l'aiguille de fermeture (24) et de la douille (22).

5. Buse chauffée à fermeture à aiguille selon l'une des revendications 1 à 4, **caractérisée en ce qu'**à proximité de son extrémité tournée à l'opposé de l'aiguille de fermeture (24), la douille (22) est reliée à un dispositif d'entraînement hydraulique, pneumatique ou mécanique, qui agit sur la douille (22), déplace axialement la douille et provoque ainsi le mouvement de fermeture et d'ouverture de l'aiguille de fermeture (24) reliée à la douille.

6. Buse chauffée à fermeture à aiguille selon l'une des revendications 1 à 5, **caractérisée en ce que** les tronçons partiels (12, 14) se recouvrent sur une distance (L2).

7. Buse chauffée à fermeture à aiguille selon la revendication 1, **caractérisée en ce que** sur sa face frontale tournée à l'opposé de l'aiguille de fermeture (24), la douille (40) présente un contour qui correspond à l'extrémité avant du tronçon partiel (12) et/ou de l'élément chauffant (28).

8. Buse chauffée à fermeture à aiguille selon la revendication 2, **caractérisée en ce que** la douille (22) est réalisée d'un seul tenant avec un dispositif (21) servant de piston, et le piston est monté déplaçable dans un cylindre (48).

9. Buse chauffée à fermeture à aiguille selon la revendication 1, **caractérisée en ce que** l'extrémité avant libre de l'élément chauffant (28) présente un agrandissement (62) de type cône.

10. Buse chauffée à fermeture à aiguille selon la revendication 9, **caractérisée en ce que** l'extrémité frontale de l'élément chauffant (28) présente une plus grande surface que la surface de sa section transversale dans sa zone en forme de tige, et a en particulier la forme d'une calotte partielle.

11. Buse chauffée à fermeture à aiguille selon l'une des revendications précédentes, **caractérisée en ce que** dans la zone de la face frontale de sa paroi extérieure, le tronçon partiel (12) présente un bord (90) de type taillant.

12. Buse chauffée à fermeture à aiguille selon l'une des revendications 1 à 11, **caractérisée en ce que** dans la paroi extérieure du tronçon partiel (12), dans la zone de son extrémité (66), est formée une rainure périphérique qui forme des lèvres d'étanchéité relativement élastiques.

13. Buse chauffée à fermeture à aiguille selon la revendication 12, **caractérisée en ce que** dans la zone de l'extrémité du tronçon partiel (14), tournée vers le tronçon partiel (12), est disposée une garniture d'étanchéité (74) réalisée selon la revendication 12, mais coopérant avec le diamètre extérieur de la douille (22).

14. Buse chauffée à fermeture à aiguille selon la revendication 1, **caractérisée en ce que** la fente annulaire (S1) est remplie par une douille de guidage (32) qui présente au moins un perçage à travers lequel passe une tige (36) qui relie en transmission le dispositif (38) à la douille (40).
